# EUROPÄISCHE PATENTSCHRIFT

(11) **EP 4 341 532 B1**
(45) Veröffentlichungstag und Bekanntmachung des Hinweises auf die Patenterteilung: **14.05.2025**
(21) Anmeldenummer: 22729594.6
(22) Anmeldetag: 18.05.2022
(51) Int. Cl.: F01D 5/02

(54) **VERFAHREN ZUR WUCHTUNG VON TURBINENRÄDERN VON ABGASTURBINEN, UND GEWUCHTETES TURBINENRAD**
METHOD FOR BALANCING TURBINE WHEELS OF EXHAUST GAS TURBINES, AND BALANCED TURBINE WHEEL
PROCÉDÉ D'ÉQUILIBRAGE DE ROUES DE TURBINE DES TURBINES À GAZ D'ÉCHAPPEMENT, ET ROUE DE TURBINE ÉQUILIBRÉE

(30) Priorität: 18.05.2021 EP 21174375
(43) Veröffentlichungstag der Anmeldung: 27.03.2024
(73) Patentinhaber: Accelleron Switzerland Ltd., 5400 Baden (CH)
(72) Erfinder: GEIST, Nico, 79872 Bernau im Schwarzwald (DE); SENN, Stephan, 5236 Remigen (CH); BURGER, Frank, 79777 Obermettingen (DE)
(74) Vertreter: Zimmermann & Partner Patentanwälte mbB
(86) Internationale Anmeldenummer: PCT/EP2022/063443
(87) Internationale Veröffentlichungsnummer: WO 2022/243375

(56) Entgegenhaltungen:
- US-A1- 2020 392 848
- US-B2- 8 936 439

## Beschreibung

### TECHNISCHES GEBIET

Die vorliegende Erfindung betrifft ein Verfahren zur Wuchtung von Turbinenrädern von Abgasturbinen mittels Einbringung eines hinsichtlich Form und Lage definierten Massenabtragsbereichs in der Nabenrückwand eines Turbinenrads von Abgasturbinen sowie ein gewuchtetes Turbinenrad für Abgasturbinen.

### TECHNISCHER HINTERGRUND

Abgasturbinen werden eingesetzt, um die im Abgas enthaltene Energie nutzbar zu machen. Zur Energieentziehung aus dem Abgasstrom kommen Turbinenräder einer Abgasturbine zum Einsatz, welche im Abgasstrom verortet sind und eine strömungsmechanisch optimierte Formgebung aufweisen. Das Turbinenrad ist hierbei auf einer Welle angeordnet und mit dieser um eine Rotationsachse rotierbar gelagert.

Aufgrund der hohen Drehzahlen von Turbinenräder von Abgasturbinen, sowie ihrer Position im Abgaskanal, sind Turbinenräder thermisch und mechanisch hochbelastete Komponenten von Abgasturbinen. Vor allem die mechanische Beanspruchung innerhalb eines Turbinenrads von Abgasturbinen ist enorm und rührt zu großen Teilen von den hohen Drehzahlen und damit einhergehenden Fliehkräften her. Abweichungen der Massenverteilung über dem Umfang eines Turbinenrads, welche den Rundlauf eines Turbinenrads stören und potentiell zusätzliche Belastungen erzeugen können, nehmen dabei eine herausragende Rolle ein. Der über den Umfang ungleich verteilten Masse, auch Unwucht genannt, wird daher aktiv, sowohl durch konstruktive Maßnahmen wie durch Nachbearbeitungen eines Turbinenrads einer Abgasturbine, begegnet.

Im Stand der Technik wird typischerweise zur Reduzierung der Unwucht eines Turbinenrads einer Abgasturbine ein sogenannter Balancierrand auf der Nabenrückwand vorgesehen. Dieser Balancierrand stellt sich als konvexe, in Umfangsrichtung umlaufende Auswulstung auf der Nabenrückwand dar. Im Laufe eines Auswuchtprozesses kann der Balancierrand definiert abgetragen werden und somit eine in Umfangsrichtung des Turbinenrads einer Abgasturbine gleichmäßige Verteilung der Massen erzeugt werden. Hierzu ist es bekannt, den Balancierrand mittels eines planen Schleifverfahrens abzutragen.

Der für den Auswuchtprozess vorzusehende Balancierrand birgt allerdings in vielerlei Hinsicht Nachteile. Diese sind unter anderem, und nicht limitiert darauf, das Vorsehen, Konstruieren und Berechnen zusätzlicher Bestandteile (und somit Massen) in einem Turbinenrad einer Abgasturbine, zusätzlich nötige Bearbeitungsschritte im Fertigungsprozess und negative Auswirkungen auf die innere Lastverteilung und Beanspruchung eines Turbinenrads einer Abgasturbine. Gerade die zusätzliche Anbringung von Massen in einem mit hoher Drehzahl rotierenden Turbinenrad einer Abgasturbine, was zusätzliche Fliehkräfte hervorruft, wie die unvorteilhafte Charakteristik eines Balancierrandes auf die mechanischen Spannungen innerhalb eines Turbinenrads einer Abgasturbine sind nachteilig. Darauf basierend wirkt sich ein Balancierrand ebenfalls nachteilig auf die Zyklenfähigkeit, und hierbei besonders auf die Zyklenfähigkeit betreffend einer Ermüdung bei niedrigen Zyklen (low-cycle fatigue), auch als *low-cycle* Zyklenfähigkeit bezeichnet, aus.

Angesichts des vorstehend Erwähnten besteht der Bedarf an einem Verfahren zur Wuchtung eines Turbinenrads einer Abgasturbine, welches die genannten Nachteile zumindest teilweise zu verringern vermag, sowie an einem entsprechend gewuchteten Turbinenrad. US 2020 / 392 848 A1 beschreibt ein Abgasturbolader-Rad mit einer Nabe die eine Nase, eine hintere Scheibe mit einem Wellenverbindungsabschnitt und eine Drehachse und Schaufeln, die sich von der Nabe aus erstrecken, um den Abgasstromkanal zu definieren, umfasst. US 8 936 439 B3 beschreibt ein Turbinenrad das um eine Achse angeordnet ist und eine Rückseite mit einem darauf angeordneten Separator hat, einem inneren Hinterschnitt, der zwischen dem Separator und der Achse angeordnet ist, und eine äußere Hinterschneidung zwischen dem Separator und einem äußeren Umfang der der Rückseite angeordnet ist.

### KURZE DARSTELLUNG DER ERFINDUNG

Diese Aufgabe wird durch ein Verfahren zur Wuchtung eines Turbinenrads gemäß Anspruch 1 gelöst. Ferner wird die Aufgabe durch ein Turbinenrad nach Anspruch 8, und eine Abgasturbine nach Anspruch 12 gelöst. Weitere Ausführungsformen, Modifikationen und Verbesserungen ergeben sich anhand der folgenden Beschreibung und der beigefügten Ansprüche,

Gemäß einem Aspekt der Erfindung wird ein Verfahren zur Wuchtung eines Turbinenrads für eine Abgasturbine bereitgestellt. Das Turbinenrad ist um seine Rotationsachse rotierbar und weist eine Nabe und eine Vielzahl von an der Nabe befestigten, in einem Fluidströmungsbereich angeordneten Turbinenschaufeln auf. Die Nabe weist eine von dem Fluidströmungsbereich abgewandte Nabenrückwand mit einer konzentrisch um die Rotationsachse verlaufenden Markierungswulst auf. Das Verfahren umfasst:
- Bewegen eines ellipsoidischen spanabhebenden Werkzeugs relativ zu dem Turbinenrad an eine Massenabtragsposition neben der Markierungswulst;
- Einbringen einer bezüglich der Rotationsachse asymmetrischen Massenabtragseinbuchtung in die Nabenrückwand zur Wuchtung des Turbinenrads durch Abtragen, mittels des spanabhebenden Werkzeugs, von Nabenmaterial der Nabenrückwand, neben der Markierungswulst und unter Stehenlassen der Markierungswulst.

Gemäß einem Aspekt der Erfindung wird ein Turbinenrad für eine Abgasturbine bereitgestellt, wobei das Turbinenrad um seine Rotationsachse rotierbar ist und aufweist: eine Nabe; und eine Vielzahl von an der Nabe befestigten, in einem Fluidströmungsbereich angeordneten Turbinenschaufeln, wobei die Nabe eine von dem Fluidströmungsbereich abgewandte Nabenrückwand aufweist. In der Nabenrückwand befindet sich eine bezüglich der Rotationsachse asymmetrische Massenabtragseinbuchtung zur Wuchtung des Turbinenrads. Die Massenabtragseinbuchtung ist als konkave Vertiefung in der Nabenrückwand mit einer Querschnittskontur in Form eines Ellipsensegments ausgeführt, wobei die Querschnittskontur in einer die Rotationsachse enthaltenden Querschnittsebene Z-Z definiert ist. Die Nabenrückwand weist weiter eine konzentrisch zu der Rotationsachse verlaufende Markierungswulst auf, wobei die Markierungswulst und die Massenabtragseinbuchtung benachbart zueinander sind, ohne sich radial zu überlappen.

Indem die Massenabtragseinbuchtung als konkave Vertiefung in der Nabenrückwand ausgeführt wird, kann gemäß einem vorzugsweisen Aspekt der Erfindung auf den Balancierrand auf der Nabenrückwand verzichtet werden. Insbesondere kann die Nabenrückwand nach der Wuchtung frei von nicht-rotationssymmetrischen konvexen Erhebungen gestaltet werden. Dadurch kann die rotierende Masse und Trägheit der Nabe reduziert werden. Reduzierte Trägheit kann zu einem verbesserten Beschleunigungsverhalten des Rotors beitragen. Durch die Querschnittskontur der Massenabtragseinbuchtung in Form eines Ellipsensegments kann weiter die Beanspruchung der Nabe reduziert und zusätzliche Last vermieden werden.

### KURZBESCHREIBUNG DER FIGUREN

Nachfolgend wird die Erfindung anhand von Ausführungsformen näher erläutert, ohne dass diese den durch die Ansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Die Figuren zeigen:
Figur 1: Draufsicht auf die Nabenrückwand (15) eines Turbinenrads (10) einer Abgasturbine gemäß einer Ausführungsform;
Figur 2: Radialer Querschnitt entlang der Querschnittsebene Z-Z des Turbinenrads (10) der Figur 1;
Figur 3: Radialer Querschnitt wie in Figur 2, mit geometrischer Bemaßung der einzelnen (Teil-) Komponenten;
Figur 4: eine Detailansicht des Querschnitts der Figur 2; und
Figur 5: Radialer Querschnitt entlang der Querschnittsebene Z-Z des Turbinenrads (10) während der Durchführung des Verfahrens gemäß einer Ausführungsform der Erfindung.

### DETAILLIERTE BESCHREIBUNG DER FIGUREN

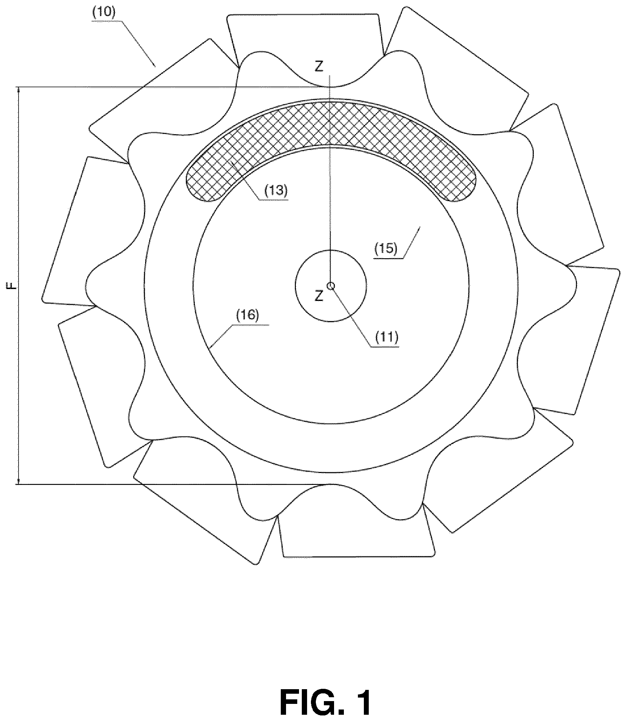

Mit Bezugnahme auf Figuren 1 bis 4 wird nun ein Turbinenrad (10) einer Abgasturbine gemäß einer Ausführungsform beschrieben. Das Turbinenrad (10) ist dabei rotierbar um seine Rotationsachse (11).

Figur 1 zeigt eine schematische Draufsicht auf die Nabenrückwand (15) eines Turbinenrads (10) einer Abgasturbine gemäß einer Ausführungsform. Das Turbinenrad (10) wurde mittels des hierin beschriebenen Verfahrens ausgewuchtet. Zu erkennen ist am radial äußeren Rand der Nabenrückwand (15) eine Ausführung der Nabenrückwand (15) mit Scallop (wellenförmige Kante) eines Turbinenrads (10) einer Abgasturbine. Die Ausführung mit Scallop ist nicht zwingend erforderlich, und alternativ kann die Nabenrückwand auch beispielsweise kreisrund sein.

Radial außerhalb der Nabe (12) sind schematisch eine Vielzahl von an der Nabe (12) befestigten, in einem Fluidströmungsbereich (14) angeordneten Turbinenschaufeln zu erkennen.

Die Nabenrückwand (15) verfügt weiter über eine Markierungswulst (16), welche rotationssymmetrisch um die Rotationsachse (11) und konzentrisch zur Rotationsachse (11) angeordnet ist. Die Markierungswulst (16) kann auf einer beliebigen radialen Position der Nabenrückwand (15) angeordnet sein, vorzugsweise in der radial äußeren Hälfe der Nabenrückwand (15), besonders bevorzugt in dem radial äußeren Drittel. Die Markierungswulst kann sich dabei als Erhebung über die Grundfläche der Nabenrückwand (15) darstellen und somit diese in axialer Richtung überragen.

Weiterhin weist die Nabenrückwand (15) eine Massenabtragseinbuchtung (13) auf. Die Massenabtragseinbuchtung (13) ist als um die Rotationsachse (11) verlaufender Kreisbogen ausgebildet. Die Massenabtragseinbuchtung (13) verläuft somit konzentrisch zu der Markierungswulst (16) welche als visuelle Referenz dient. Die Massenabtragseinbuchtung (13) ist nicht rotationssymmetrisch, sondern deckt winkelmäßig in Umfangsrichtung nur einen Teil der Nabenrückwand ab, maximal einen Winkelbereich von 180°, also maximal die Hälfte der Nabenrückwand (15). Die Massenabtragseinbuchtung (13) dient zur Wuchtung des Turbinenrads (10), und ihre Abmessungen wurden in Abhängigkeit von der ermittelten Unwucht ausgebildet.

Die Massenabtragseinbuchtung (13) verläuft direkt benachbart zu der Markierungswulst (16), und zwar radial außerhalb der Markierungswulst (16). Die Massenabtragseinbuchtung (13) erstreckt sich in der radial äußeren Hälfte der Nabenrückwand (15), vorzugsweise im radial äußeren Drittel. Die Markierungswulst (16) kann dabei von der Massenabtragseinbuchtung (13) radial beabstandet sein.

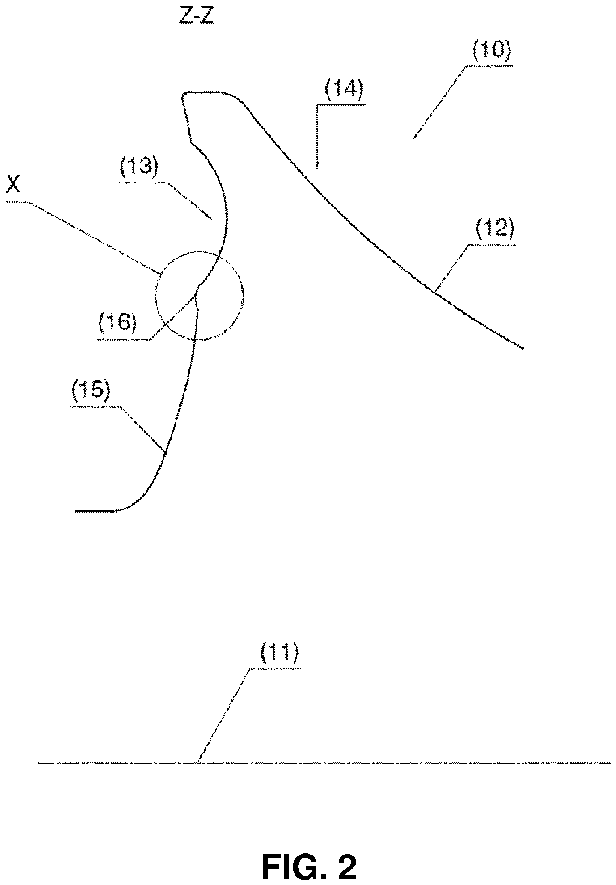

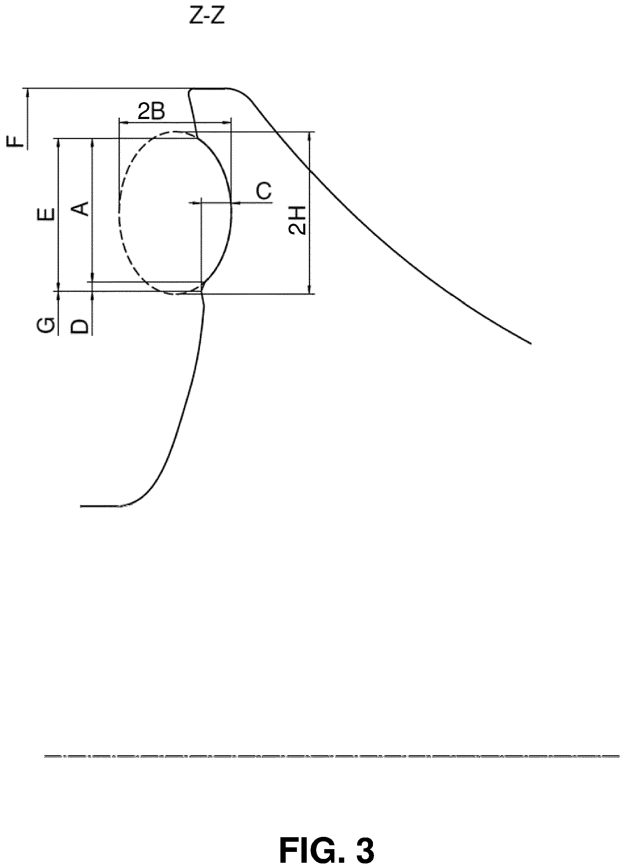

Figuren 2 und 3 zeigen eine Querschnittsansicht des Turbinenrads (10) der Figur 1, wobei die Querschnittsebene Z-Z die Rotationsachse (11) enthält. Zu erkennen ist das um die Rotationsachse (11) rotierbare Turbinenrad (10) mit Nabe (12). An der Vorderseite der Nabe (12) befindet sich ein Fluidströmungsbereich (14) des Turbinenrads (10), wobei die im Fluidströmungsbereich (14) an der Nabe (12) angebrachten Turbinenschaufeln nicht dargestellt sind. In der Nabenrückwand (15) ist die Querschnittskontur der Massenabtragseinbuchtung (13) und die Querschnittskontur einer Markierungswulst (16) erkennbar.

Figur 3 zeigt die gleiche Querschnittsansicht wie Fig. 2, mit einigen darin eingezeichneten geometrischen Abmessungen. F gibt den Durchmesser der Rückwand des Turbinenrads (10) an. Der Durchmesser F eines Turbinenrads (10) einer Abgasturbine wird bei einer nicht kreisrunden Rückwand als der kleinste durch die Achse verlaufende Durchmesser, also bezüglich der radial innersten Ausdehnung der Nabenrückwand, definiert. Falls also etwa ein Scallop vorhanden ist, wie in Figur 1 illustriert, bezieht sich der Durchmesser F also auf den radial innersten (kleinsten) Durchmesser der Nabe (12). In der Ausführungsform der Fig. 1 ist dies der Radius in der Querschnittsebene Z-Z. In einer alternativen Ausführungsform (nicht dargestellt) ist kein Scallop vorhanden und die Nabenrückwand ist kreisrund mit konstantem Durchmesser F.

Weiterhin sind in Figur 3 die geometrischen Bemaßungen und Beziehungen von Teilen der Nabenrückwand (15) und insbesondere der darin vorgesehenen Massenabtragseinbuchtung (13) ersichtlich. Die Massenabtragseinbuchtung (13) ist im Querschnitt als Ellipsensegment einer Ellipse ausgestaltet, wobei H die große Halbachse der Ellipse und B die kleine Halbachse der Ellipse darstellt. Die Eindringtiefe C der Massenabtragseinbuchtung (13) stellt die Tiefe der Eindringung der Ellipse in die Nabenrückwand (15) dar. Hierbei ist C genauer definiert als die tiefste Eindringtiefe gegenüber der Kontur der Nabenrückwand (15) ohne Massenabtragseinbuchtung (13). Diese Kontur ohne Massenabtragseinbuchtung (13) ist aus einem Querschnitt eines massenabtragseinbuchtungsfreien Teils der Nabenrückwand ersichtlich, etwa aus einem Querschnitt auf der im Vergleich zu dem Querschnitt Z-Z gegenüberliegenden, also um die Achse (11) gespiegelten Seite der Nabenrückwand (15) in Figur 1.

Weiterhin ist in Figur 3 die Markierungswulst (16) zu erkennen. Soweit nicht anders angegeben, beziehen sich alle die Markierungswulst (16) betreffenden Positionsangaben auf den Scheitelpunkt der Markierungswulst (16). Der Markierungswulstscheiteldurchmesser G ist also beispielsweise als der Durchmesser des Scheitelpunkts der Markierungswulst (16) definiert. Die Markierungswulst (16) - also genauer ihr Scheitelpunkt - ist von der Massenabtragseinbuchtung (13) radial beabstandet, wobei D den radialen Abstand zwischen dem Scheitelpunkt der Markierungswulst (16) und der ihr benachbarten (hier: radial inneren) Grenze der Massenabtragseinbuchtung (13) angibt. Der radiale Abstand zwischen dem Scheitelpunkt der Markierungswulst (16) und der von ihr entfernten (hier: radial äußeren) Grenze der Massenabtragseinbuchtung (13) ist mit E gekennzeichnet. Die Massenabtragseinbuchtung (13) besitzt eine radiale Erstreckung, von radial innerer zu radial äußerer Grenze, von A. Die ellipsoidisch ausgeformte Massenabtragseinbuchtung (13) wird durch eine Ellipse definiert, wobei die Ellipse eine große Halbachse H und kleine Halbachse B besitzt. Die Eindringtiefe der Massenabtragseinbuchtung (13) wird durch C gekennzeichnet. Weiterhin gibt F den Durchmesser der Rückwand des Turbinenrads (10) einer Abgasturbine an.

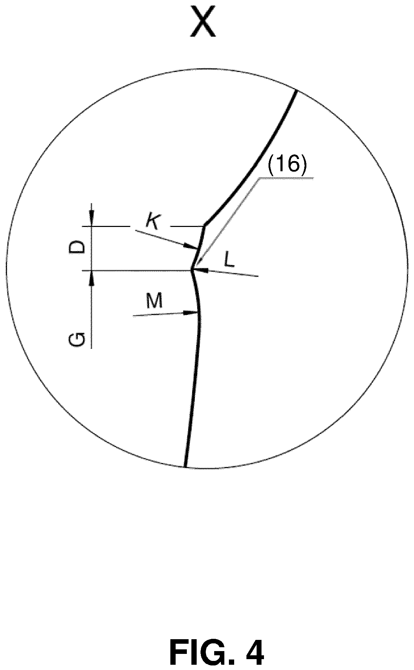

Figur 4 zeigt eine Detailansicht von Figur 2 und Figur 3 und enthält eine vergrößerte Ansicht der Markierungswulst (16) und der ihr benachbarten (radial inneren) Grenze der Massenabtragseinbuchtung (13), mit Abstand D dazwischen. Die Krümmungsradien K, L, M definieren die Markierungswulst (16) geometrisch. Dabei gibt K den konkaven Krümmungsradius des Übergangs zwischen Scheitelpunkt der Markierungswulst (16) und der radial inneren Grenze der Massenabtragseinbuchtung (13) an, L den konvexen Krümmungsradius am Scheitelpunkt der Markierungswulst (16) und M den konkaven Krümmungsradius des Übergangs von Scheitelpunkt der Markierungswulst (16) zum Bereich der Nabenrückwand (15) welcher radial innerhalb der Markierungswulst (16) liegt. Der Krümmungsradius L kann auch L=0 sein, was einer scharfen Kante entspricht.

Weiterhin ist in Figur 4 zu erkennen, dass die Markierungswulst (16) als konvexe Erhebung in und bezüglich der Nabenrückwand (15) ausgeprägt ist, wobei die Markierungswulst (16) durch die Krümmungsradien K, L und M geometrisch definiert ist.

In den Figuren sind, wie in Figur 1 ersichtlich, alle in den Figuren 2 und 3 dargestellten Elemente der Nabenrückwand mit Ausnahme der Massenabtragseinbuchtung (13) um die Rotationsachse (11) umlaufend.

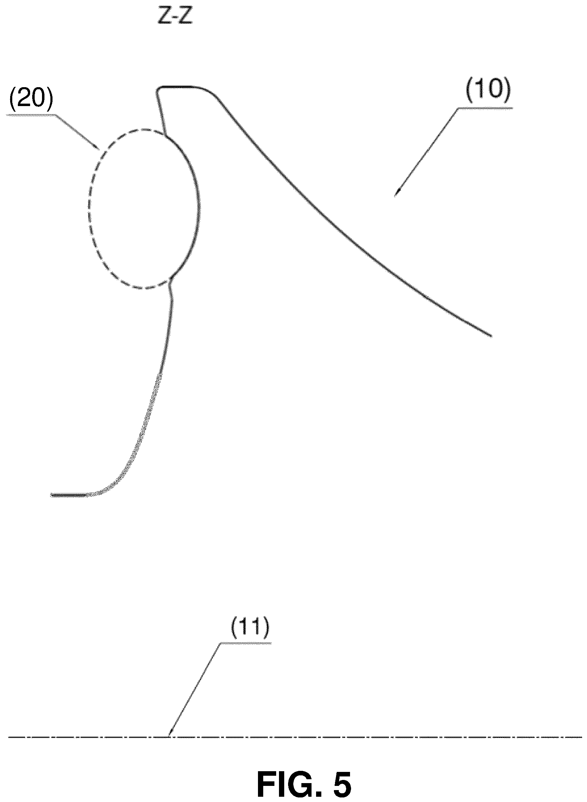

Figur 5 illustriert ein Verfahren zum Wuchten eines Turbinenrads (10) für eine Abgasturbine bzw. einer Abgasturbine. Als Ausgangspunkt des Verfahrens dient das Turbinenrad (10) der Figuren 1 bis 4, jedoch noch ohne Massenabtragseinbuchtung (13). Gemäß dem Verfahren wird zunächst in bekannter Weise die Unwucht ermittelt, etwa durch Ausmessung der Unwucht am rotierenden Turbinenrad (10).

Abhängig von der ermittelten Unwucht des Turbinenrads (10) wird ein Materialabtrags-Profil für die Massenabtragseinbuchtung (13) ermittelt. Dieses Materialabtrags-Profil gibt an, wie die Materialabtragung ausgeführt werden soll und kann beispielsweise durch die winkelmäßige Ausdehnung (Anfangs- und Endwinkel) und die Eindringtiefe einer anzufertigenden Massenabtragseinbuchtung (13) parametrisiert sein. Das Materialabtrags-Profil und die daraus resultierende Massenabtragseinbuchtung (13) sind bezüglich der Rotationsachse (11) asymmetrisch, um den Unwucht-Ausgleich zu ermöglichen.

Anschließend wird die Massenabtragseinbuchtung (13) mittels eines in Figur 5 dargestellten ellipsoidisch spanabhebenden Werkzeugs (20) entsprechend dem Materialabtrags-Profil in die Nabenrückwand eingebracht. Die Einbringung von Massenabtragungen an Massenabtragspositionen erfolgt durch eine Relativbewegung des Werkzeugs (20) und der Nabenrückwand (15) zueinander, also beispielsweise durch Bewegung des Werkzeugs (20) relativ zu einer ortsfesten Nabenrückwand (15). Durch die Form und Bewegung des ellipsoidisch spanabhebenden Werkzeugs (20) wird die Form der Massenabtragseinbuchtting (13) vorgegeben.

Die Bewegung des Werkzeugs (20) und, daraus resultierend, die Position der Massenabtragseinbuchtung (13) wird hierbei relativ zur Markierungswulst (16), nämlich neben und entlang der Markierungswulst (16) ausgerichtet, wobei die Markierungswulst (16) stehengelassen wird. Dadurch ermöglicht die Markierungswulst (16) eine präzise Orientierung für das Einbringen der Massenabtragseinbuchtung (13) an definierter Stelle in die Nabenrückwand (15). Dadurch kann im Prozess sichergestellt werden, dass der radial innere Bereich der Nabenrückwand (15) (radial innerhalb der Markierungswulst (16)), der mechanisch hoch belastet ist beziehungsweise mechanische Spannungsmaxima aufweist, nicht beeinträchtigt wird. Darüber hinaus ist eine visuelle Kontrolle nach der Wuchtung möglich. Eine Wuchtung im Bereich radial kleiner der Markierungswulst (16) könnte zu mechanischen Limitierungen hinsichtlich der Ermüdung bei niedrigen Zyklen (*low-cycle fatigue)* des Turbinenrads (10) führen. Vorzugsweise wird bei der Bewegung der radiale Abstand des Werkzeugs (20) von der Markierungswulst (16) nicht verändert.

Als ellipsoidisch spanabhebendes Werkzeug (20) ist hier schematisch ein Schleifgerät mit ellipsoidischem Schleifkopf dargestellt, wobei der ellipsoidische Schleifkopf beispielsweise um eine in Radialrichtung verlaufende Achse rotiert. Auch eine andere etwa geneigte Rotationsachse ist in alternativen Ausführungsformen möglich. Im Falle eines kugelmäßig spanabhebendes Werkzeugs, etwa eines Kugelschleifkopfs, ist die Rotationsachse frei variierbar.

Das Verfahren kann optional mindestens eine weitere Ermittlung der (verbliebenen) Unwucht und Anpassung bzw. Ergänzung der Massenabtragseinbuchtung (13) gemäß den oben beschriebenen Schritten umfassen.

### BESCHREIBUNG WEITERER DETAILS, MÖGLICHER VARIANTEN UND ALLGEMEINER ASPEKTE

Im Weiteren werden mögliche Varianten und allgemeine optionale Aspekte der Erfindung beschrieben. Hierbei ist, soweit nicht ausgeschlossen, jeder Aspekt mit jedem beliebigen anderen Aspekt der Erfindung kombinierbar. Die Aspekte werden auch als Ausführungsform bezeichnet und teilweise durch Bezugszeichen illustriert, welche sich auf die in den zuvor beschriebenen Figuren dargestellten Elemente beziehen, ohne jedoch in weiterer Hinsicht auf die dort dargestellten Ausführungsformen beschränkt zu sein.

Im Folgenden werden zunächst Aspekte bezüglich eines Verfahrens zur Wuchtung eines Turbinenrads (10) für eine Abgasturbine bzw. einer Abgasturbine beschrieben. Das Turbinenrad (10) der Abgasturbine ist dabei drehbar gelagert und rotiert um seine Rotationsachse (11). Das Turbinenrad (10) weist eine Nabe (12) und eine Vielzahl von an der Nabe (12) befestigten, in einem Fluidströmungsbereich (14) angeordneter Turbinenschaufeln auf. Der Fluidströmungsbereich (14) ist der Bereich, in welchem das Fluid, insbesondere Abgas, die Turbinenschaufeln anströmt und dabei Arbeit verrichtet. Weiterhin weist die Nabe (12) eine von dem Fluidströmungsbereich (14) abgewandte Nabenrückwand (15) auf. Die Nabenrückwand (15) ist also auf einer von dem Fluidströmungsbereich (14) abgewandten, etwa ihm gegenüberliegenden Seite der Nabe (12) angeordnet. Das schließt jedoch nicht aus, dass auch die Nabenrückwand (15) von dem Fluid benetzt sein kann. Die Nabenrückwand (15) ist vorzugsweise frei von Turbinenschaufeln und/oder kann sich in einer vorzugsweise radialen Richtung (z.B. mit Winkelabweichung von maximal 40° gegenüber der radialen Ebene) erstrecken. Die Nabenrückwand (15) verfügt über eine konzentrisch um die Rotationsachse (11) verlaufende Markierungswulst (16).

Gemäß einem allgemeinen Aspekt ist vorgesehen, dass mittels eines ellipsoidisch spanabhebenden Werkzeugs Massenabtragung an Massenabtragspositionen neben der Markierungswulst (16) in der Nabenrückwand (15) eines Turbinenrads (10) einer Abgasturbine erfolgt.

Die Einbringung von Massenabtragungen an Massenabtragspositionen erfolgt durch eine Relativbewegung eines ellipsoidisch spanabhebenden Werkzeugs und der Nabenrückwand (15) zueinander. Hierbei kann das ellipsoidisch spanabhebende Werkzeug bewegt werden und die Nabenrückwand (15) in Ruhe verharren, die Nabenrückwand (15) kann bewegt werden und das ellipsoidisch spanabhebende Werkzeug kann in Ruhe verharren, und es kann eine simultane Bewegung von ellipsoidisch spanabhebendem Werkzeug und Nabenrückwand (15), sowie sämtliche Kombinationen hieraus, erfolgen. Vorzugsweise wird das ellipsoidisch spanabhebende Werkzeug zumindest in der Tiefenrichtung bewegt. Die Markierungswulst (16) ist besonders vorteilhaft, wenn das ellipsoidisch spanabhebende Werkzeug ein frei bewegliches Werkzeug ist und etwa durch eine menschliche Hand gehalten und geführt wird.

Für jedwede Art und Kombination von Relativbewegung von ellipsoidisch spanabhebenden Werkzeug und Nabenrückwand (15) zueinander, wird die (relative) Bewegung des spanabhebenden Werkzeugs an der in der Nabenrückwand (15) des Turbinenrads (10) ausgeprägten Markierungswulst (16) ausgerichtet.

Die Einbringung von Massenabtragungen an Massenabtragspositionen in der Nabenrückwand (15) zur Wuchtung eines Turbinenrads (10) einer Abgasturbine erfolgt dabei durch Abtragen von einer bezüglich der Rotationsachse (11) asymmetrischen Massenabtragseinbuchtung (13) mittels des ellipsoidisch spanabhebenden Werkzeugs. Die Position(en) der Massenabtragseinbuchtung(en) (13) wird (werden) dabei relativ nebenstehend zur Markierungswulst (16) ausgerichtet, wobei die Markierungswulst (16) stehengelassen wird. Der hervorstehendste Teil der Markierungswulst (16), welcher den Scheitelpunkt der Markierungswulst beinhaltet, verbleibt somit unberührt und unbearbeitet.

Das ellipsoidisch spanabhebende Werkzeug weist eine Werkzeugbearbeitungsgeometrie auf, welche in Form eines Ellipsoids ausgestaltet ist. Das Werkzeug weist somit etwa einen ellipsoidisch geformten spanabhebenden Werkzeugkopf für die Materialabtragung eines Ellipsoid-Segments aus der Nabenrückwand auf. Der die Werkzeugbearbeitungsgeometrie beschreibende Ellipsoid ist dabei durch die drei Halbachsen H, B und Y definiert. Hierbei entsprechen H und B den in Figur 3 dargestellten Halbachsen der resultierenden Querschnittskontur der Massenabtragseinbuchtung (13), und Y ist die zu diesen beiden Halbachsen (und somit zur Zeichenebene der Figur 5) senkrecht verlaufende weitere Halbachse des die Werkzeugbearbeitungsgeometrie beschreibenden Ellipsoids. Bei einem rotierenden Werkzeugkopf sind die beiden um die Rotationsachse senkrecht verlaufenden Halbachsen vorzugsweise gleich, also bei axial rotierendem Werkzeugkopf ist Y=H; bei radial rotierendem Werkzeugkopf ist Y=B.

In einer Ausführungsform des ellipsoidisch spanabhebenden Werkzeugs weist der die Werkzeugbearbeitungsgeometrie beschreibende Ellipsoid eine Ausgestaltung auf, in welcher zumindest zwei der drei Halbachsen H, B und Y über dieselbe Längenausdehnung verfügen. In einer weiteren Ausführungsform des ellipsoidisch spanabhebenden Werkzeugs weist der die Werkzeugbearbeitungsgeometrie beschreibende Ellipsoid eine Ausgestaltung auf, in welcher alle drei Halbachsen H, B und Y über dieselbe Längenausdehnung verfügen. Gemäß einem Aspekt kann das Werkzeug einen rotierenden Werkzeugkopf mit einer elliptischen, der Werkzeugbearbeitungsgeometrie entsprechenden Form aufweisen. Sofern der Werkzeugkopf rotiert, ist die Rotationsachse vorzugsweise eine der Halbachsen und zumindest die anderen beiden Halbachsen sind gleich.

Haben alle drei Halbachsen H, B und Y dieselbe Längenausdehnung ergibt sich als Werkzeugbearbeitungsgeometrie eine Kugel, es handelt sich also um ein kugelmäßig spanabhebendes Werkzeug (z.B. ein Werkzeug mit Kugelkopf). Ein solches kugelmäßig spanabhebendes Werkzeug hat den Vorteil, dass die winkelmäßige Ausrichtung des Werkzeugs im Verhältnis zu der Nabenrückwand zumindest innerhalb eines Winkelbereichs keine Rolle spielt, was die Handhabung des Werkzeugs - insbesondere bei einer freien Bewegbarkeit des Werkzeugs - erleichtert.

Das ellipsoidisch spanabhebende Werkzeug kann jedwedes Werkzeug sein, welches in der Lage ist, spanend zu bearbeiten. Typischerweise, aber nicht limitiert darauf, seinen Drehwerkzeuge, Bohrwerkzeuge, Senkwerkzeuge, Reibwerkzeuge, Fräswerkzeuge, Hobelwerkzeuge, Stoßwerkzeuge, Räumwerkzeuge, Sägewerkzeuge, Feilwerkzeuge, Raspelwerkzeuge, Bürstspanwerkzeuge, Schabwerkzeuge, Meißelwerkzeuge, Schleifwerkzeuge (mit und ohne rotierendem Werkzeug), Bandschleifwerkzeuge, Honwerkzeuge, Läppwerkzeuge oder Gleitspanwerkzeuge genannt.

In einer Ausführungsform ist das ellipsoidisch spanabhebende Werkzeug ein Schleifwerkzeug mit ellipsoidschem Schleifkopf, beispielsweise ein Kugelschleifwerkzeug mit Kugelschleiftkopf.

Gemäß einem Aspekt wird die Massenabtragseinbuchtung (13) durch ein ellipsoidisch spanabhebendes Werkzeug in die Nabenrückwand (15) eines Turbinenrads einer Abgasturbine eingebracht. Dabei erfolgt gemäß einem Aspekt die Einbringung entlang eines Kreissektors der Nabenrückwand (15) und in Umfangsrichtung entlang eines Kreisbogens um die Achse (11). Vorzugsweise erfolgt die Einbringung innerhalb eines Ringsegments oder Kreissegments entlang eines Kreisbogens. Gemäß eines weiteren Aspekts kann auch eine Einbringung entlang eines beliebigen eindimensionalen Profils auf der Nabenrückwand (15) eines Turbinenrads (10) erfolgen.

Gemäß einem Aspekt kann die Massenabtragseinbuchtung (13) als ein kontinuierliches Kreissegment vorgesehen werden, wie in Figur 1 beispielhaft gezeigt. Allgemeiner kann die Massenabtragseinbuchtung (13) als eine kontinuierliche, segmentartige, unterbrochene oder diskret punktuelle Einbringung entlang eines Kreisbogens vorgesehen werden. Der Kreisbogen, entlang dessen die Relativbewegung von ellipsoidisch spanabhebenden Werkzeug und Nabenrückwand (15) erfolgt, ist so an der Markierungswulst (16) in der Nabenrückwand (15) ausgerichtet, dass der Kreisbogen nebenstehend der Markierungswulst (16) in der Nabenrückwand (15) verläuft.

Gemäß einem Aspekt umfasst das Verfahren zunächst das Ermitteln einer Unwucht des Turbinenrads (10). Abhängig von der ermittelten Unwucht des Turbinenrads (10) wird sodann ein Materialabtrags-Profil für die Massenabtragseinbuchtung (13) erzeugt. Dieses Materialabtrags-Profil kann etwa ein eindimensionales Profil entlang eines Kreissegments der Nabenrückwand (15) sein und entlang eines Kreisbogens neben der Markierungswulst (16) in der Nabenrückwand (15) verlaufen. Das Materialabtrags-Profil gibt an, wie die Materialabtragung ausgeführt werden soll. Mögliche Ausführungsformen umfassen ein kontinuierliches, segmentartiges, unterbrochenes und/oder diskret punktuelles Materialabtrags-Profil. Beliebige Profile mit einer (kontinuierlich oder diskret) winkelabhängigen Eindringtiefe können verwendet werden. Gemäß einem Aspekt wird das Profil durch einen maximalen Winkelbereich und/oder eine maximale Eindringtiefe begrenzt. Gemäß eines weiteren Aspekts kann die Einbringung eines Materialabtrags-Profils für die Massenabtragseinbuchtung (13) auch erfolgen ohne eine vorherige Ermittlung einer Unwucht des Turbinenrads (10).

Gemäß einer Ausführungsform kann das Materialabtrags-Profil beispielsweise eine (winkelmäßige) Mittelposition auf der Nabenrückwand (15), einen Winkelbereich entlang des Kreisbogens, eine Längenerstreckung entlang des Kreisbogens der Massenabtragseinbuchtung (13), und/oder die (konstante oder winkelabhängige) Materialabtragstiefe C umfassen. Insbesondere kann eine über den jeweiligen Winkelbereich veränderliche Materialabtragstiefe C für die Massenabtragseinbuchtung (13) festgelegt werden und somit beispielsweise Ausläufe erzeugt werden. Auch kann auf diese Weise ein Materialabtrags-Profil für mehrere Massenabtragseinbuchtungen (13) vorgesehen werden.

Mit dem zur Verfügung gestellten Materialabtrags-Profil wird die Massenabtragseinbuchtung (13) in die Nabenrückwand (15) eines Turbinenrads einer Abgasturbine eingebracht. Gemäß einem Aspekt wird durch das Einbringen der Massenabtragseinbuchtung (13) die Unwucht des Turbinenrads verringert.

Um die Massenabtragseinbuchtung (13) optimiert auszuführen, wird gemäß einem Aspekt eine abtragungsfreie Naben-Testgeometrie definiert. Diese abtragungsfreie Naben-Testgeometrie stellt eine Ausgestaltung der Nabe (12), insbesondere der Nabenrückwand (15), ohne jegliche Materialabtragung in der Nabenrückwand (15) dar.

Gemäß einem weiteren Aspekt wird (etwa als eine weitere Naben-Testgeometrie) eine maximal abgetragene Naben-Testgeometrie als die Naben-Testgeometrie bei maximal als zulässig definierter Materialabtragung in der Nabenrückwand (15) definiert. Die maximal als zulässig definierte Materialabtragung in der Nabenrückwand (15) wird vorgegeben, beispielsweise anhand von Bedingungen wie z.B. typischerweise benötigte Abtragung, minimale zulässige Nabenrestwanddicke an den Positionen der Materialabtragungen, Fertigungsprozesse und Fertigungsmöglichkeiten an den Positionen der Materialabtragungen und/oder strukturmechanische Forderungen an den Positionen der Materialabtragungen,

Gemäß einem Aspekt wird anhand der maximal abgetragenen Naben-Testgeometrie, also unter Berücksichtigung der maximal zulässigen Materialabtragung in der Nabenrückwand (15), ein erster Naben-Qualitätsparameter berechnet. Vorzugsweise wird die Nabengeometrie durch Optimierung einer, unter Verwendung des ersten Naben-Qualitätsparameters bestimmten, Naben-Optimierungsgröße optimiert.

Gemäß einem Aspekt kann weiter auch ein zweiter Naben-Qualitätsparameter anhand der abtragungsfreien Naben-Testgeometrie, also ohne Berücksichtigung der maximal zulässigen Materialabtragung in der Nabenrückwand (15), berechnet werden. Vorzugsweise wird die Naben-Optimierungsgröße dann weiter auch unter Verwendung des zweiten Naben-Qualitätsparameters bestimmt, beispielsweise durch Summierung jeweiliger unter Verwendung des ersten bzw. zweiten Naben-Qualitätsparameters bestimmter Summanden.

Der (erste bzw. zweite) Naben-Qualitätsparameter kann beispielsweise zumindest einen Parameter ausgewählt aus der folgenden Liste enthalten: mechanische Spannung, mechanische Hauptspannung, mechanische Normalspannung, mechanische Schubspannung, eine mechanische Zyklenoptimierungs-Größe, insbesondere eine *Cycle*fatigue-Angabe (etwa die simulierte Zyklenfähigkeit betreffend Ermüdung bei niedrigen Zyklen), eine Kerbwirkungszahl, eine Formzahl, eine Stützziffer, ein Kraftfluss, eine geometrische Ausgestaltung der Massenabtragseinbuchtung (13), eine Abweichung von einer vorgegebenen Ziel-Gesamtabtragung. Die Naben-Optimierungsgröße kann beispielsweise eine Norm (z.B. L2-Norm, also Quadrat) eines solchen Parameters, oder die gegebenenfalls gewichtete Summe solcher Normen für mehrere Parameter, enthalten. Insbesondere kann die Naben-Optimierungsgröße somit eine Erhöhung der simulierten Zyklenfähigkeit betreffend Ermüdung bei niedrigen Zyklen für die abtragungsfreien und/oder die maximal abgetragene Naben-Testgeometrie bestrafen.

Die Optimierung wird dabei vorzugsweise iterativ durchgeführt. Dabei werden vorzugsweise die Naben-Testgeometrie definierende Parameter iterativ verändert, um zu einem Optimum der Naben-Optimierungsgröße zu gelangen.

Gemäß einem Aspekt kann auch die Gestalt der maximal als zulässig definierten Materialabtragung optimiert werden, indem auch Parameter, welche die maximal als zulässig definierte Materialabtragung definieren, iterativ verändert werden. Die Naben-Optimierungsgröße kann in diesem Fall etwa auch einen Term enthalten, der eine ausreichend große maximal als zulässig definierte Materialabtragung sicherstellt, etwa einen Term, welcher eine Abweichung von einer vorgegebenen Ziel-Gesamtabtragung bestraft.

Die Optimierung der Nabenrückwandgeometrie erfolgt dabei mit mindestens einem als Naben-Qualitätsparameter genannten Parameter.

Vorzugsweise erfolgt die Optimierung der Nabengeometrie als multifaktorielle Optimierung bei welcher mehr als ein Naben-Qualitätsparameter herangezogen wird. Vorzugsweise wird die Nabengeometrie durch Optimierung einer, unter Verwendung mehrerer Naben-Qualitätsparameters bestimmten, Naben-Optimierungsgröße optimiert. Die Optimierung wird dabei vorzugsweise iterativ durchgeführt. Dabei werden vorzugsweise die von der Naben-Testgeometrie abgezogenen Materialabtragungen iterativ verändert und folglich je mehrere Naben-Qualitätsparameter berechnet und mit den bereits vorhanden gleichartigen Naben-Qualitätsparametern verglichen. Der Vergleich der Naben-Qualitätsparameter und die Optimierung kann mit jedweder Art mathematischer Optimierungsvorgehensweisen geschehen welche hierfür geeignet sind. Die iterative Veränderung der abgezogenen Materialabtragungen von der Naben-Testgeometrie ist dabei durch eine Naben-Testgeometrie ohne jedwede Materialabtragungen und durch eine Naben-Testgeometrie mit maximal zulässigen Materialabtragungen begrenzt.

Im Weiteren werden Aspekte bezüglich eines - etwa von dem beschriebenen Verfahren hergestellten -Turbinenrads (10) für eine Abgasturbine bzw. einer Abgasturbine beschrieben. Das Turbinenrad (10) ist dabei drehbar gelagert und rotiert um seine Rotationsachse (11). Das Turbinenrad (10) weist dabei eine Nabe (12) und eine Vielzahl von an der Nabe (12) befestigte, in einem Fluidströmungsbereich (14) angeordneter Turbinenschaufeln auf. Weiterhin weist die Nabe (12) eine von dem Fluidströmungsbereich (14) abgewandte Nabenrückwand (15) auf. In der Nabenrückwand (15) befindet sich eine bezüglich der Rotationsachse (11) asymmetrische Massenabtragseinbuchtung (13) zur Wuchtung des Turbinenrads (10). Die Massenabtragseinbuchtung (13) ist dabei als konkave Vertiefung in der Nabenrückwand (15) mit einer Querschnittskontur der Massenabtragseinbuchtung (13) in Form eines Ellipsensegments ausgeführt. Dabei ist die Querschnittskontur der Massenabtragseinbuchtung (13) in einer die Rotationsachse (11) enthaltenden Querschnittsebene Z-Z definiert. Weiterhin verfügt die Nabenrückwand (15) über eine konzentrisch um die Rotationsachse (11) verlaufenden Markierungswulst (16), wobei die Markierungswulst (16) die Massenabtragseinbuchtung (13) benachbart zueinander sind, ohne sich radial zu überlappen. Mit anderen Worten überlappt die Massenabtragseinbuchtung (13) nicht den Scheitel der Markierungswulst (16), und der Scheitel ist daher im Umfangsrichtung der Nabenrückwand kontinuierlich umlaufend.

Die Massenabtragseinbuchtung (13) weist gemäß einem Aspekt eine Querschnittskontur in einer die Rotationsachse (11) enthaltenden Querschnittsebene Z-Z auf. Die Querschnittskontur ist ellipsoidisch ausgestaltet, also durch ein Ellipsensegment abgebildet. Die dieses Ellipsensegment beschreibende Ellipse ist durch eine erste (z.B. große) Halbachse H und eine zweite (z.B. kleine) Halbachse B der Ellipse definiert. Die erste Halbachse H kann sich in radialer Richtung erstrecken, und die zweite Halbachse B der Ellipse kann sich in axialer Richtung erstrecken. Vorzugsweise haben die erste Halbachse H und die zweite Halbachse B der Ellipse dieselbe Längenausdehnung, wodurch sich in der in einer die Rotationsachse (11) enthaltenden Querschnittsebene Z-Z eine Querschnittskontur in geometrischer Form eines Kreissegments ergibt.

Vorzugsweise gilt eine hierin getroffene Definition der Querschnittskontur für eine Vielzahl von die Rotationsachse (11) und einen Teil der Massenabtragseinbuchtung (13) enthaltende Querschnittsebenen Z-Z, besonders bevorzugt für jede solche Querschnittsebene zumindest in einem kontinuierlichen Winkelbereich, der mindestens die Hälfte oder sogar mindestens 80% des gesamten Winkelbereichs der Massenabtragseinbuchtung (13) abdeckt. Im Falle mehrerer Massenabtragseinbuchtungen (13) gilt eine hierin getroffene Definition vorzugsweise für alle Massenabtragseinbuchtungen (13).

Der Querschnittskontur der Massenabtragseinbuchtung (13) weist gemäß einem Aspekt einen minimalen Krümmungsradius Krₘᵢₙ auf. Der minimale Krümmungsradius der zugrundeliegenden Ellipse kann durch das Verhältnis Keₘᵢₙ = ((B*B) / H) abgeschätzt werden, wobei H die große (hier: erste) Halbachse der Ellipse, B die kleine (hier: zweite) Halbachse der Ellipse angibt. Der Krümmungsradius soll typischerweise ein Verhältnis von Krₘᵢₙ / F ≥ 0,03 und/oder Keₘᵢₙ / F ≥ 0,03 erfüllen, wobei und F den Durchmesser des Turbinenrads (10) angibt. Bei Längengleichheit von großer Halbachse H und kleiner Halbachse B der Ellipse, und somit kreisförmiger (also kreissegment-förmiger) Querschnittskontur, ergibt sich folglich R / F ≥ 0,03 wobei R den Radius der kreisförmigen Querschnittskontur angibt. Im Fall der Längengleichheit von großer Halbachse H und kleiner Halbachse B entsprechen große Halbachse H und kleine Halbachse B einander und zugleich entsprechen große Halbachse H und kleine Halbachse B dem Radius R der kreisförmigen Querschnittskontur.

Gemäß einem Aspekt hat die Massenabtragseinbuchtung (13) eine Eindringtiefe C von C > 0 und/oder von C < 0,6*B, vorzugsweise C < 0,5*B, und besonders bevorzugt C < 0,4*B wobei B die zweite (axiale und/oder kleine) Ellipsenhalbachse ist.

Die Massenabtragseinbuchtung (13) ist in der Nabenrückwand (15) des Turbinenrads (10) und nebenstehend zur ebenfalls in der Nabenrückwand (15) vorhanden Markierungswulst (16) verortet. Die Massenabtragseinbuchtung (13) und/oder die Markierungswulst (16) kann gemäß einem Aspekt an jedweder Umfangsposition und Radialposition in der Nabenrückwand (15) eingebracht werden, wobei sich beide nebeneinanderstehend, also ohne weitere funktionale Oberflächenmerkmale dazwischen, befinden.

Vorzugsweise erfolgt die Einbringung der Massenabtragseinbuchtung (13) und/oder der Markierungswulst (16) dabei in der radial äußeren Hälfte der Nabenrückwand (15) (bezogen auf den Durchmesser F), vorzugsweise zumindest teilweise in dem radial äußeren Drittel. Vorzugsweise ist die Massenabtragseinbuchtung (13) (vollständig) radial außerhalb der Markierungswulst (16) positioniert. Gemäß einem Aspekt ist etwa der Bereich der Nabenrückwand (15) innerhalb der Markierungswulst (16) frei von Massenabtragseinbuchtung (13) und/oder vollständig rotationssymmetrisch. Gemäß einem Aspekt erlaubt die Markierungswulst (16), einen Bereich für die Massenabtragseinbuchtung (13) zu markieren (nämlich beispielsweise radial außerhalb der Markierungswulst (16)), und/oder einen nicht für die Massenabtragseinbuchtung (13) vorgesehenen Bereich zu markieren sicherzustellen (nämlich beispielsweise radial innerhalb der Markierungswulst (16)). Aufgrund der Markierungswulst (16) kann sichergestellt und leicht überprüft werden, dass die Massenabtragseinbuchtung (13) nur in dem vorgesehenen Bereich bzw. nicht außerhalb dieses Bereichs eingebracht wird. Dies ist besonders dann nützlich, wenn die Nabenrückwandgeometrie für die darin vorgesehene Massenabtragseinbuchtung (13) optimiert wurde.

Zur Einbringung der Massenabtragseinbuchtung (13) kann gemäß einem Aspekt ein beliebiges Werkzeug Verwendung finden, welches in der Lage ist, spanend zu bearbeiten. Typischerweise, aber nicht limitiert darauf, seien Drehwerkzeuge, Bohrwerkzeuge, Senkwerkzeuge, Reibwerkzeuge, Fräswerkzeuge, Hobelwerkzeuge, Stoßwerkzeuge, Räumwerkzeuge, Sägewerkzeuge, Feilwerkzeuge, Raspelwerkzeuge, Bürstspanwerkzeuge, Schabwerkzeuge, Meißelwerkzeuge, Schleifwerkzeuge mit und ohne rotierendem Werkzeug, Bandschleifwerkzeuge, Honwerkzeuge, Läppwerkzeuge oder Gleitspanwerkzeuge genannt.

Vorzugsweise ist das spanabhebende Werkzeug ein Schleifwerkzeug mit ellipsoidischen Schleifkopf. Typischerweise verfügt dieses Schleifwerkzeug über einen kugelförmigen Schleifkopf und es handelt sich folglich um ein Kugelschleifwerkzeug mit Kugelschleifkopf. Das spanabhebende Werkzeug mit ellipsoidischen Schleifkopf kann ebenfalls so geformt sein, dass lediglich der Teil des spanabhebenden Werkzeuges welcher während der Einbringung von Massenabtragseinbuchtungen (13) mit dem Turbinenrad (10) in Kontakt steht eine ellipsoidische Form aufweist.

Die Einbringung von Massenabtragseinbuchtung (13) zur Wuchtung eines Turbinenrads (10) einer Abgasturbine erfolgt gemäß einem Aspekt innerhalb eines Kreissektors der Nabenrückwand (15) eines Turbinenrads (10) einer Abgasturbine und in Umfangsrichtung entlang eines Kreisbogens. Vorzugsweise erfolgt die Einbringung innerhalb eines Ringsegments oder Kreissegments entlang eines Kreisbogens. Es ist dabei beispielhaft, aber nicht limitiert darauf, eine kontinuierliche, segmentartige, unterbrochene oder diskrete punktuelle Einbringung entlang des Kreisbogens genannt.

Die Nabenrückwand (15) eines Turbinenrads (10) einer Abgasturbine weist eine Markierungswulst (16) auf, wobei diese Markierungswulst (16) rotationssymmetrisch bezüglich der Rotationsachse (11) ist und konzentrisch um die Rotationsachse (11) verläuft.

Die Markierungswulst (16) in der Nabenrückwand (15) verfügt gemäß einem Aspekt über eine Querschnittskontur welche in einer die Rotationsachse (11) enthaltenden Querschnittsebene Z-Z verortet ist. Die Querschnittskontur der Markierungswulst (16) gestaltet sich konvex erhaben bezüglich der Nabenrückwand (15).

Die Markierungswulst (16) ist gemäß einem Aspekt um einen Abstand D von der ebenfalls in der Nabenrückwand (15) eines Turbinenrads (10) einer Abgasturbine enthaltenen Massenabtragseinbuchtung (13) radial beabstandet. Vorzugsweise gilt dabei E = A + D und E ≤ (F - G) / 2 und G / F > 0,5, wobei A die radiale Erstreckung der Massenabtragseinbuchtung (13) (radiale Distanz zwischen der radial inneren Grenze der Massenabtragseinbuchtung (13) und der radial äußeren Grenze der Massenabtragseinbuchtung (13)), D die radiale Distanz zwischen der Markierungswulst (16) und der radial näheren (hier radial inneren) Grenze der Massenabtragseinbuchtung (13), E die radiale Erstreckung zwischen der Markierungswulst (16) und der radial ferneren (hier radial äußeren) Grenze der Massenabtragseinbuchtung (13), F den Durchmesser der Rückwand eines Turbinenrads (10) einer Abgasturbine und G den Durchmesser der Markierungswulst (16), also den Durchmesser des durch die umlaufende Markierungswulst (16) definierten Kreises auf der Nabenrückwand (15) - angibt. Hierin ist, sofern nicht anders angegeben, die radiale Position der Markierungswulst stets durch ihren Scheitel definiert. Bei mehreren Massenabtragseinbuchtungen (13) kann für jede Massenabtragseinbuchtung (13) eine individuelle radiale Beabstandung D von der Markierungswulst (16) bestimmt und angewandt werden. Typischerweise wird für alle Massenabtragseinbuchtungen (13) eine gleiche radiale Beabstandung D gewählt und angewandt. Der radiale Minimalabstand D zwischen der Massenabtragseinbuchtung (13) und der Markierungswulst (16) beträgt vorzugsweise 0 < D < 0,05*F, besonders bevorzugt 0 < D < 0,025*F.

Gemäß einem Aspekt hat die (vorzugsweise rotationssymmetrische) Querschnittskontur der Markierungswulst (16) einen Scheitelpunkt, eine dem Scheitelpunkt gegenüber radial innere Flanke und eine dem Scheitelpunkt gegenüber radial äußere Flanke. Die radial innere Flanke hat einen konkaven Krümmungsradius M, die radial äußere Flanke hat einen konkaven Krümmungsradius K, und der Scheitelpunkt hat einen konvexen Krümmungsradius L. Soweit der Krümmungsradius nicht konstant ist, beschreiben diese Größen den jeweils kleinsten Krümmungsradius. Anders gesagt, gibt K den (kleinsten) Krümmungsradius des Übergangs zwischen Scheitelpunkt der Markierungswulst (16) und der radial inneren Grenze der Massenabtragseinbuchtung (13) an, L den (kleinsten) Krümmungsradius am Scheitelpunkt der Markierungswulst (16) und M den (kleinsten) Krümmungsradius des Übergangs von Scheitelpunkt der Markierungswulst (16) zum Bereich der Nabenrückwand (15) welcher radial innerhalb der Markierungswulst (16) liegt an. Dabei gilt gemäß einem Aspekt K > 0, L ≥ 0 und/oder M >0. Des Weiteren gilt vorzugsweise K / F < 0,07, M / F < 0,07, L / K < 0,15 und/oder L / M <0,1.

Gemäß einem Aspekt ist die Oberfläche der Nabenrückwand (15) im gesamten radialen Bereich zumindest vom Radius der Markierungswulst (16) bis zu dem äußersten Radius der Massenabtragseinbuchtung (13) eine nachbearbeitete Oberfläche, hat also eine höhere Glattheit und Präzision als etwa eine unmittelbar durch Guss erhaltene Oberfläche.

Die Markierungswulst (16) in der Nabenrückwand (15) eines Turbinenrads (10) einer Abgasturbine kann auf jedweder radialen Position angebracht werden. Vorzugsweise befindet sich die Markierungswulst (16) radial innerhalb der Massenabtragseinbuchtung (13).

Gemäß einem Aspekt ist die Unwucht des Turbinenrads geringer als eine Unwucht eines entsprechenden (gedachten) Turbinenrads mit rotationssymmetrischer Nabe ohne Massenabtragseinbuchtung (13). Gemäß einem Aspekt ist die Zyklenfähigkeit betreffend Ermüdung bei niedrigen Zyklen des Turbinenrads nicht oder höchstens um 2% geringer als die Zyklenfähigkeit eines entsprechenden (gedachten) Turbinenrads mit rotationssymmetrischer Nabe ohne Massenabtragseinbuchtung (13).

Alle vorgenannten Aspekte für ein Turbinenrad (10) einer Abgasturbine beziehen sich Abgasturbinen jedweder Bauart, vorzugsweise auf Radial-Abgasturbinen oder Mixed-Flow-Abgasturbinen (auch als Diagonal-Abgasturbinen bezeichnet). Bei Radialabgasturbinen ist das Turbinenrad (10) als ein Radialturbinenrad ausgeführt. Bei Mixed-Flow-Abgasturbinen ist das Turbinenrad (10) als Mixed-Flow- (Diagonal-)Abgasturbinenrad ausgeführt, also mit einer Nabenvorderwand, deren Eintrittstangente in einer diagonalen Richtung mit sowohl axialer als auch radialer Komponenteverläuft.

Die Abgasturbine ist gemäß einem Aspekt dazu ausgelegt, durch Abgas eines Verbrennungsmotors angetrieben zu werden. Die Abgasturbine ist gemäß einem Aspekt für einen Turbolader vorgesehen. Bei dem Turbolader treibt die Abgasturbine ein auf einer gemeinsamen Welle angeordnetes Verdichterrad, um eine Druck-, Dichten- und Enthalpieerhöhung eines angesaugten Fluids und somit die Steigerung des Ladedrucks und allgemein der Effizienz von Verbrennungskraftmaschinen zu bewirken. Alternativ oder zusätzlich kann die Abgasturbine auch andere Energieverwerter antreiben, etwa einen elektrischen Generator und/oder eine Antriebswelle. Gemäß einem Aspekt ist ein Verbrennungsmotor mit der durch Abgas des Verbrennungsmotors angetriebenen Abgasturbine und ein Turbolader mit der Abgasturbine vorgesehen.

In einem weiteren Aspekt der Erfindung wird eine Abgasturbine mit einem Turbinenrad (10) bereitgestellt welches jedes Merkmal des zweiten Aspekts der Erfindung aufweist. Die Abgasturbine kann mit jedweder Art von Abgas betrieben werden. Weiterhin seien sämtliche Bauarten von Abgasturbinen wie Radial-Abgasturbinen oder Mixed-Flow-Abgasturbinen berücksichtigt. Auch seien sämtliche möglichen Verbraucher auf der Abgasturbinenwelle wie beispielhaft Verdichterräder, elektrische Generatoren oder Antriebswellen berücksichtigt. Vorzugsweise handelt es sich bei der Abgasturbine um einen Abgasturbolader.

### BEZUGSZEICHENLISTE

- 10: Turbinenrad einer Abgasturbine.
- 11: Rotationsachse eines Turbinenrads einer Abgasturbine.
- 12: Nabe eines Turbinenrads einer Abgasturbine.
- 13: Massenabtragseinbuchtung.
- 14: Fluidströmungsbereich eines Turbinenrads einer Abgasturbine.
- 15: Nabenrückwand eines Turbinenrads einer Abgasturbine.
- 16: Markierungswulst.
- 20: Ellipsoidisch spanabhebenden Werkzeug.
- A: Radiale Erstreckung der ellipsoidisch ausgeformten Massenabtragseinbuchtung von radial innerer Grenze der ellipsoidisch ausgeformten Massenabtragseinbuchtung bis zur radial äußeren Grenze der ellipsoidisch ausgeformten Massenabtragseinbuchtung.
- B: Zweite (Kleine) Halbachse der ellipsoidisch ausgeformten Massenabtragseinbuchtung.
- C: Materialabtragungstiefe.
- D: Radiale Distanz von der Markierungswulst bis zur radial inneren Grenze der ellipsoidisch ausgeformten Massenabtragseinbuchtung.
- E: Radiale Distanz von der Markierungswulst bis zur radial äußeren Grenze der ellipsoidisch ausgeformten Massenabtragseinbuchtung.
- F: Durchmesser der Rückwand eines Turbinenrads einer Abgasturbine.
- G: Durchmesser der Markierungswulst.
- H: Erste (Große) Halbachse der ellipsoidisch ausgeformten Massenabtragseinbuchtung.
- K: Krümmungsradius des Übergangs zwischen Scheitelpunkt der Markierungswulst und radial innerer Grenze der Massenabtragseinbuchtung.
- L: Krümmungsradius am Scheitelpunkt der Markierungswulst.
- M: Krümmungsradius des Übergangs von Scheitelpunkt der Markierungswulst zur Nabenrückwand radial innerhalb der Markierungswulst.
- X: Detailansicht von Figur 2 mit vergrößerter Darstellung der Markierungswulst.
- Y: Dritte Halbachse des den Werkzeugbearbeitungskopf definierenden Ellipsoids.
- Z-Z: Schnittführung in einem Turbinenrad einer Abgasturbine welche die Rotationsachse enthält.

## Patentansprüche

1. Ein Verfahren zur Wuchtung eines Turbinenrads (10) für eine Abgasturbine, wobei das Turbinenrad (10) um seine Rotationsachse (11) rotierbar ist und eine Nabe (12) und eine Vielzahl von an der Nabe (12) befestigten, in einem Fluidströmungsbereich (14) angeordneten Turbinenschaufeln aufweist, wobei die Nabe eine von dem Fluidströmungsbereich (14) abgewandte Nabenrückwand (15) mit einer konzentrisch um die Rotationsachse (11) verlaufenden Markierungswulst (16) aufweist,
das Verfahren umfassend:
- Bewegen eines ellipsoidischen spanabhebenden Werkzeugs relativ zu dem Turbinenrad (10) an eine Massenabtragsposition neben der Markierungswulst (16);
- Einbringen einer bezüglich der Rotationsachse (11) asymmetrischen Massenabtragseinbuchtung (13) in die Nabenrückwand (15) zur Wuchtung des Turbinenrads (10) durch Abtragen, mittels des spanabhebenden Werkzeugs, von Nabenmaterial der Nabenrückwand (15), neben der Markierungswulst (16) und unter Stehenlassen der Markierungswulst (16).

2. Verfahren zur Herstellung eines Turbinenrads (10) für eine Abgasturbine nach Anspruch 1, wobei das spanabhebende Werkzeug ein Schleifwerkzeug mit ellipsoidischem Schleifkopf, vorzugsweise ein Kugelschleifwerkzeug mit Kugelschleifkopf ist.

3. Verfahren nach einem beliebigen der vorangehenden Ansprüche, wobei die Massenabtragseinbuchtung (13) in Umfangsrichtung entlang eines Ringsegments um die Rotationsachse (11) eingebracht wird.

4. Verfahren nach einem beliebigen der vorangehenden Ansprüche, weiter umfassend:
- Ermitteln einer Unwucht des Turbinenrads;
- Abhängig von der ermittelten Unwucht, Einstellen eines Materialabtrags-Profils für die Massenabtragseinbuchtung (13); und
- Einbringen der Massenabtragseinbuchtung (13) mit dem eingestellten Materialabtrags-Profil.

5. Verfahren nach einem beliebigen der vorangehenden Ansprüche, weiter umfassend:
- Definieren einer abtragungsfreien Naben-Testgeometrie; und
- Berechnen eines ersten Naben-Qualitätsparameters unter Verwendung einer maximal abgetragenen Naben-Testgeometrie als der definierten abtragungsfreien Naben-Testgeometrie abzüglich einer maximalen Abtragungsmenge von der Nabenrückwand der abtragungsfreien Naben-Testgeometrie;
- vorzugsweise Optimieren der Nabengeometrie durch Optimieren einer unter Verwendung des ersten Naben-Qualitätsparameters errechneten Naben-Optimierungsgröße durch iterative Veränderung einer Naben-Testgeometrie zwischen abtragungsfreier und maximal abgetragener Naben-Testgeometrie,
wobei das Abtragen von Nabenmaterial an der Nabenrückwand (15) durch die maximale Abtragungsmenge begrenzt wird.

6. Verfahren nach Anspruch 5, wobei der Naben-Qualitätsparameter zumindest einen Parameter ausgewählt aus der folgenden Liste umfasst: eine mechanische Spannung, eine mechanische Zyklenoptimierungs-Größe, eine *Cycle fatigue*-Angabe.

7. Verfahren nach Anspruch 5 oder 6, weiter umfassend
- Berechnen eines zweiten Naben-Qualitätsparameters unter Verwendung der definierten Naben-Testgeometrie ohne Abtragung von Nabenrückwandmaterial von der Naben-Testgeometrie;
- vorzugsweise Optimieren der Nabengeometrie durch Optimieren einer unter Verwendung der ersten und zweiten Naben-Qualitätsparameter errechneten Naben-Optimierungsgröße durch iterative Veränderung einer Naben-Testgeometrie zwischen abtragungsfreier und maximal abgetragener Naben-Testgeometrie.

8. Turbinenrad (10) für eine Abgasturbine, wobei das Turbinenrad (10) um seine Rotationsachse (11) rotierbar ist und aufweist:
- eine Nabe (12); und
- eine Vielzahl von an der Nabe (12) befestigten, in einem Fluidströmungsbereich (14) angeordneten Turbinenschaufeln, wobei die Nabe (12) eine von dem Fluidströmungsbereich (14) abgewandte Nabenrückwand (15) aufweist, wobei
sich in der Nabenrückwand (15) eine bezüglich der Rotationsachse (11) asymmetrische Massenabtragseinbuchtung (13) zur Wuchtung des Turbinenrads (10) befindet, wobei die Massenabtragseinbuchtung (13) als konkave Vertiefung in der Nabenrückwand (15) mit einer Querschnittskontur in Form eines Ellipsensegments ausgeführt ist, wobei die Querschnittskontur der Massenabtragseinbuchtung (13) in einer die Rotationsachse (11) enthaltenden Querschnittsebene (Z-Z) definiert ist, wobei
die Nabenrückwand (15) weiter eine konzentrisch zu der Rotationsachse (11) verlaufende Markierungswulst (16) aufweist, wobei die Markierungswulst (16) und die Massenabtragseinbuchtung (13) benachbart zueinander sind, ohne sich radial zu überlappen.

9. Turbinenrad (10) nach Anspruch 8, wobei die Massenabtragseinbuchtung (13) zumindest eine der folgenden Eigenschaften (a) bis (g) aufweist:
(a) die Querschnittskontur der Massenabtragseinbuchtung (13) hat die Form eines Kreissegments;
(b) die Querschnittskontur der Massenabtragseinbuchtung (13) hat einen minimalen Krümmungsradius von größer als 0,03 * F, wobei F den Durchmesser der Rückwand des Turbinenrads (10) angibt;
(c) die Querschnittskontur der Massenabtragseinbuchtung (13) genügt der Bedingung ((B*B) / H) / F ≥ 0,03 wobei H die große Halbachse der elliptischen Querschnittskontur der Massenabtragseinbuchtung (13), B die kleine Halbachse der elliptischen Querschnittskontur der Massenabtragseinbuchtung (13) und F den Durchmesser der Rückwand des Turbinenrads (10) angibt;
(d) die Massenabtragseinbuchtung (13) ist zumindest teilweise in der radial äußeren Hälfte der Nabenrückwand (15) angeordnet;
(e) die Massenabtragseinbuchtung (13) ist mittels eines spanabtragenden Werkzeugs, vorzugsweise mittels eines Schleifwerkzeugs erzeugt;
(f) die Massenabtragseinbuchtung (13) erstreckt sich entlang eines umfangsmäßig um die Achse laufenden Ringsegments;
(g) die Massenabtragseinbuchtung (13) erstreckt sich als kontinuierliche Linie, als Folge von abschnittsweise kontinuierlichen Linien, oder als Folge von diskreten Punkt-Einbuchtungen.

10. Turbinenrad (10) nach Anspruch 8 oder 9, wobei die Markierungswulst (16) zumindest eine der folgenden Eigenschaften (i) bis (iv) aufweist:
(i) die Markierungswulst (16) ist erhaben und in der Querschnittsebene konvex;
(ii) die Markierungswulst (16) ist bezüglich der Rotationsachse (11) rotationssymmetrisch;
(iii) die Markierungswulst (16) ist gemäß der Ungleichung E ≤ (F - G) / 2 und/oder G / F > 0,5 angeordnet, wobei A die radiale Erstreckung der Massenabtragseinbuchtung (13) von einem radial inneren Ende der Massenabtragseinbuchtung (13) bis zu einem radial äußeren Ende der Massenabtragseinbuchtung (13), D den radialen Abstand des Scheitelpunkts der Markierungswulst (16) gegenüber der Massenabtragseinbuchtung (13), E = A + D den radialen Abstand des Scheitelpunkts der Markierungswulst (16) von der radial äußeren Grenze der Massenabtragseinbuchtung (13), F den Durchmesser des Turbinenrads (10) und G den Durchmesser des durch den Scheitelpunkt der Markierungswulst (16) definierten Kreises angibt;
(iv) die Markierungswulst (16) ist radial innerhalb der Massenabtragseinbuchtung (13) angeordnet.

11. Turbinenrad (10) nach einem beliebigen der Ansprüche 8 bis 10, wobei das Turbinenrad ein Radialturbinenrad für eine Radial-Abgasturbine oder ein Mixed-Flow-Turbinenrad für eine Mixed-Flow- Abgasturbine ist.

12. Abgasturbine, vorzugsweise Abgasturbolader, mit einem Turbinenrad (10) nach einem beliebigen der Ansprüche 8 bis 11.

## Claims

1. A method for balancing a turbine wheel (10) for an exhaust gas turbine, wherein the turbine wheel (10) is rotatable about its rotational axis (11) and has a hub (12) and a plurality of turbine blades attached to the hub (12) and arranged in a fluid flow region (14), wherein the hub has a hub rear wall (15) facing away from the fluid flow region (14) with a marking bead (16) running concentrically about the rotational axis (11), the method comprising:
- movement of an ellipsoidal material-removal tool relative to the turbine wheel (10) at a mass-removal position next to the marking bead (16);
- creation of a mass-removal indentation (13), asymmetric relative to the rotational axis (11), in the hub rear wall (15) for balancing the turbine wheel (10) by removal, by means of the material-removal tool, of hub material of the hub rear wall (15), next to the marking bead (16) and leaving the marking bead (16) intact.

2. The method for production of a turbine wheel (10) for an exhaust gas turbine as claimed in claim 1, wherein the material-removal tool is a grinding tool with ellipsoidal grinding head, preferably a spherical grinding tool with spherical grinding head.

3. The method as claimed in any of the preceding claims, wherein the mass-removal indentation (13) is made along a ring segment in the circumferential direction about the rotational axis (11).

4. The method as claimed in any of the preceding claims, furthermore comprising:
- determination of an imbalance of the turbine wheel;
- depending on the determined imbalance, setting of a material-removal profile for the mass-removal indentation (13); and
- creation of the mass-removal indentation (13) with the set material-removal profile.

5. The method as claimed in any of the preceding claims, furthermore comprising:
- definition of a removal-free hub test geometry; and
- calculation of a first hub quality parameter using a maximally removed hub test geometry as the defined removal-free hub test geometry, minus a maximum removal quantity from the hub rear wall of the removal-free hub test geometry;
- preferably optimization of the hub geometry by optimization of a hub optimization variable, calculated using the first hub quality parameter, by iterative changing of a hub test geometry between removal-free and maximally removed hub test geometry,
wherein the removal of hub material at the hub rear wall (15) is limited by the maximum removal quantity.

6. The method as claimed in claim 5, wherein the hub quality parameter comprises at least one parameter selected from the following list: a mechanical stress, a mechanical cycle optimization variable, a cycle fatigue indicator.

7. The method as claimed in claim 5 or 6, furthermore comprising:
- calculation of a second hub quality parameter using the defined hub test geometry without removal of hub rear wall material from the hub test geometry;
- preferably, optimization of the hub geometry by optimization of a hub optimization variable, calculated using the first and second hub quality parameters, by iterative changing of a hub test geometry between removal-free and maximally removed hub test geometry.

8. A turbine wheel (10) for an exhaust gas turbine, wherein the turbine wheel (10) is rotatable about its rotational axis (11) and has
- a hub (12); and
- a plurality of turbine blades attached to the hub (12) and arranged in a fluid flow region (14), wherein the hub has a hub rear wall (15) facing away from the fluid flow region (14), wherein
a mass-removal indentation (13), asymmetric relative to the rotational axis (11), is provided in the hub rear wall (15) for balancing the turbine wheel (10), wherein the mass-removal indentation (13) is configured as a concave depression in the hub rear wall (15) with a cross-sectional contour in the form of an ellipse segment, wherein the cross-sectional contour of the mass-removal indentation (13) is defined in a cross-sectional plane (Z-Z) containing the rotational axis (11), wherein
the hub rear wall (15) furthermore has a marking bead (16) running concentrically to the rotational axis (11), wherein the marking bead (16) and the mass-removal indentation (13) are adjacent to one another without radially overlapping.

9. The turbine wheel (10) as claimed in claim 8, wherein the mass-removal indentation (13) has at least one of the following properties (a) to (g):
(a) the cross-sectional contour of the mass-removal indentation (13) has the form of a circle segment;
(b) the cross-sectional contour of the mass-removal indentation (13) has a minimum curvature radius of more than 0.03*F, wherein F is the diameter of the rear wall of the turbine wheel (10);
(c) the cross-sectional contour of the mass-removal indentation (13) fulfils the condition ((B*B) / H) / F ≥ 0.03, wherein H is the large semi-axis of the elliptical cross-sectional contour of the mass-removal indentation (13), B is the small semi-axis of the elliptical cross-sectional contour of the mass-removal indentation (13), and F is the diameter of the rear wall of the turbine wheel (10);
(d) the mass-removal indentation (13) is arranged at least partially in the radially outer half of the hub rear wall (15);
(e) the mass-removal indentation (13) is produced by means of a material-removal tool, preferably a grinding tool;
(f) the mass-removal indentation (13) extends along a ring segment running circumferentially around the axis;
(g) the mass-removal indentation (13) extends as a continuous line, as a sequence of portions of continuous lines, or as a sequence of discrete spot indentations.

10. The turbine wheel (10) as claimed in claim 8 or 9, wherein the marking bead (16) has at least one of the following properties (i) to (iv):
(i) the marking bead (16) is raised and convex in the cross-sectional plane;
(ii) the marking bead (16) is rotationally symmetrical relative to the rotational axis (11);
(iii) the marking bead (16) is arranged according to the inequation E ≤ (F - G) / 2 and/or G / F > 0.5, wherein A is the radial extent of the mass-removal indentation (13) from a radially inner end of the mass-removal indentation (13) to a radially outer end of the mass-removal indentation (13), D is the radial distance of the apex of the marking bead (16) from the mass-removal indentation (13), E = A + D is the radial distance of the apex of the marking bead (16) from the radially outer limit of the mass-removal indentation (13), F is the diameter of the turbine wheel (10), and G is the diameter of the circle defined by the apex of the marking bead (16);
(iv) the marking bead (16) is arranged radially inside the mass-removal indentation (13).

11. The turbine wheel (10) as claimed in any of claims 8 to 10, wherein the turbine wheel is a radial turbine wheel for a radial exhaust gas turbine, or a mixed-flow turbine wheel for a mixed-flow exhaust gas turbine.

12. An exhaust gas turbine, preferably an exhaust gas turbocharger, with a turbine wheel (10) as claimed in any of claims 8 to 11.

## Revendications

1. Procédé permettant d'équilibrer une roue de turbine (10) destinée à une turbine à gaz d'échappement, dans lequel la roue de turbine (10) peut tourner autour de son axe de rotation (11) et présente un moyeu (12) et une pluralité d'aubes de turbine fixées au moyeu (12) et disposées dans une zone d'écoulement de fluide (14), dans lequel le moyeu présente une paroi arrière de moyeu (15) détournée de la zone d'écoulement de fluide (14) et pourvue d'un bourrelet de marquage (16) s'étendant de manière concentrique autour de l'axe de rotation (11), le procédé comprenant les étapes consistant à :
- déplacer un outil ellipsoïde d'enlèvement de copeaux par rapport à la roue de turbine (10) vers une position d'enlèvement de masse à côté du bourrelet de marquage (16) ;
- introduire une encoche d'enlèvement de masse (13) asymétrique par rapport à l'axe de rotation (11) dans la paroi arrière de moyeu (15) pour équilibrer la roue de turbine (10) en enlevant, au moyen de l'outil d'enlèvement de copeaux, de la matière de moyeu de la paroi arrière de moyeu (15) à côté du bourrelet de marquage (16) et en réservant le bourrelet de marquage (16).

2. Procédé de fabrication d'une roue de turbine (10) pour une turbine à gaz d'échappement selon la revendication 1, dans lequel l'outil d'enlèvement de copeaux est un outil abrasif à tête abrasive ellipsoïde, de préférence un outil de meulage sphérique à tête de meulage sphérique.

3. Procédé selon l'une quelconque des revendications précédentes, dans lequel l'encoche d'enlèvement de masse (13) est introduite dans la direction circonférentielle le long d'un segment annulaire autour de l'axe de rotation (11).

4. Procédé selon l'une quelconque des revendications précédentes, comprenant en outre les étapes consistant à :
- déterminer un déséquilibre de la roue de turbine ;
- en fonction du déséquilibre déterminé, régler un profil d'enlèvement de matière pour l'encoche d'enlèvement de masse (13) ; et
- introduire l'encoche d'enlèvement de masse (13) avec le profil d'enlèvement de matière.

5. Procédé selon l'une quelconque des revendications précédentes, comprenant en outre les étapes consistant à :
- définir une géométrie d'essai de moyeu sans enlèvement ; et
- calculer un premier paramètre de qualité de moyeu en utilisant une géométrie d'essai à enlèvement maximal comme géométrie d'essai de moyeu sans enlèvement définie moins une quantité d'enlèvement maximale de la paroi arrière de moyeu de la géométrie d'essai de moyeu sans enlèvement ;
- de préférence optimiser la géométrie de moyeu par l'optimisation d'une grandeur d'optimisation de moyeu calculée en utilisant le premier paramètre de qualité de moyeu par modification itérative d'une géométrie d'essai de moyeu entre une géométrie d'essai de moyeu sans enlèvement et à enlèvement maximal,
dans lequel l'enlèvement de matière de moyeu sur la paroi arrière de moyeu (15) est limité par la quantité d'enlèvement maximale.

6. Procédé selon la revendication 5, dans lequel le paramètre de qualité de moyeu comprend au moins un paramètre sélectionné dans la liste suivante : une contrainte mécanique, une grandeur d'optimisation de cycles mécanique, une indication de fatigue de cycle.

7. Procédé selon la revendication 5 ou 6, comprenant en outre les étapes consistant à
- calculer un deuxième paramètre de qualité de moyeu en utilisant la géométrie d'essai de moyeu définie sans enlèvement de matière de paroi arrière de moyeu de la géométrie d'essai de moyeu ;
- de préférence optimiser la géométrie de moyeu par l'optimisation d'une grandeur d'optimisation de moyeu calculée en utilisant les premiers et deuxièmes paramètres de qualité de moyeu par modification itérative d'une géométrie d'essai de moyeu entre une géométrie d'essai de moyeu sans enlèvement et à enlèvement maximal.

8. Roue de turbine (10) destinée à une turbine à gaz d'échappement, la roue de turbine (10) pouvant tourner autour de son axe de rotation (11) et présentant :
- un moyeu (12) ; et
- une pluralité d'aubes de turbine fixées au moyeu (12) et disposées dans une zone d'écoulement de fluide (14), dans laquelle le moyeu (12) présente une paroi arrière de moyeu (15) détournée de la zone d'écoulement de fluide (14), dans laquelle
une encoche d'enlèvement de masse (13) asymétrique par rapport à l'axe de rotation (11) se trouve dans la paroi arrière de moyeu (15) pour équilibrer la roue de turbine (10), dans laquelle l'encoche d'enlèvement de masse (13) est réalisée comme un creux concave dans la paroi arrière de moyeu (15) ayant un contour de section transversale sous la forme d'un segment d'ellipse, dans laquelle le contour de section transversale de l'encoche d'enlèvement de masse (13) est défini dans un plan de section transversale (Z-Z) comportant l'axe de rotation (11), dans laquelle
la paroi arrière de moyeu (15) présente en outre un bourrelet de marquage (16) s'étendant de manière concentrique à l'axe de rotation (11), dans laquelle le bourrelet de marquage (16) et l'encoche d'enlèvement de masse (13) sont voisins l'un de l'autre sans se chevaucher radialement.

9. Roue de turbine (10) selon la revendication 8, dans laquelle l'encoche d'enlèvement de masse (13) présente au moins l'une des propriétés suivantes (a) à (g) :
(a) le contour de section transversale de l'encoche d'enlèvement de masse (13) présente la forme d'un segment de cercle ;
(b) le contour de section transversale de l'encoche d'enlèvement de masse (13) présente un rayon de courbure minimal supérieur à 0,03 * F, F indiquant le diamètre de la paroi arrière de la roue de turbine (10) ;
(c) le contour de section transversale de l'encoche d'enlèvement de masse (13) satisfait la condition ((B*B) / H) / F ≥ 0,03, où H indique le demi-grand axe du contour de section transversale elliptique de l'encoche d'enlèvement de masse (13), B indique le demi-petit axe du contour de section transversale elliptique de l'encoche d'enlèvement de masse (13), et F indique le diamètre de la paroi arrière de la roue de turbine (10) ;
(d) l'encoche d'enlèvement de masse (13) est disposée au moins en partie dans la moitié radialement extérieure de la paroi arrière de moyeu (15) ;
(e) l'encoche d'enlèvement de masse (13) est générée au moyen d'un outil d'enlèvement de copeaux, de préférence au moyen d'un outil abrasif ;
(f) l'encoche d'enlèvement de masse (13) s'étend le long d'un segment annulaire s'étendant en circonférence autour de l'axe ;
(g) l'encoche d'enlèvement de masse (13) s'étend comme une ligne continue, une série de lignes continues par endroits ou une série d'encoches ponctuelles discrètes.

10. Roue de turbine (10) selon la revendication 8 ou 9, dans laquelle le bourrelet de marquage (16) présente au moins l'une des propriétés suivantes (i) à (iv) :
(i) le bourrelet de marquage (16) est en relief et convexe dans le plan de section transversale ;
(ii) le bourrelet de marquage (16) est à symétrie de révolution par rapport à l'axe de rotation (11) ;
(iii) le bourrelet de marquage (16) est disposé selon l'inégalité E ≤ (F - G) / 2 et/ou G / f > 0,5, dans laquelle A indique l'étendue radiale de l'encoche d'enlèvement de masse (13) d'une extrémité radialement intérieure de l'encoche d'enlèvement de masse (13) à une extrémité radialement extérieure de l'encoche d'enlèvement de masse (13), D indique la distance radiale du sommet du bourrelet de marquage (16) par rapport à l'encoche d'enlèvement de masse (13), E = A + D indique la distance radiale du sommet du bourrelet de marquage (16) de la limite radialement extérieure de l'encoche d'enlèvement de masse (13), F indique le diamètre de la roue de turbine (10), et G indique le diamètre du cercle défini par le sommet du bourrelet de marquage (16) ;
(iv) le bourrelet de marquage (16) est disposé radialement à l'intérieur de l'encoche d'enlèvement de masse (13).

11. Roue de turbine (10) selon l'une quelconque des revendications 8 à 10, dans laquelle la roue de turbine est une roue de turbine radiale pour une turbine à gaz d'échappement radiale ou une roue de turbine à flux mixte pour une turbine à gaz d'échappement à flux mixte.

12. Turbine à gaz d'échappement, de préférence turbocompresseur, comprenant une roue de turbine (10) selon l'une quelconque des revendications 8 à 11.
